# EUROPEAN PATENT SPECIFICATION

(11) **EP 3 275 521 B1**
(45) Date of publication and mention of the grant of the patent: **02.12.2020**
(21) Application number: 17174231.5
(22) Date of filing: 02.06.2017
(51) Int. Cl.: B01D 5/00, B01D 53/26, E03B 3/28, F24F 3/14, F24F 3/153, F24F 3/16, F24F 11/00, F24F 110/10, F24F 110/20

(54) **AIR PURIFICATION AND CONDENSATION WATER-PRODUCTION SYSTEM**
LUFTREINIGUNGS- UND KONDENSATIONS-WASSERERZEUGUNGSSYSTEM
SYSTÈME DE PURIFICATION D'AIR ET DE PRODUCTION D'EAU DE CONDENSATION

(30) Priority: 26.07.2016 CN 201610594475
(43) Date of publication of application: 31.01.2018
(73) Proprietor: NG, Tat Yung, North Point, Hong Kong (CN)
(72) Inventor: NG, Tat Yung, North Point, Hong Kong (CN)
(74) Representative: Michalski Hüttermann & Partner Patentanwälte mbB

(56) References cited:
- WO-A1-03/073029
- US-A- 2 930 208
- US-A1- 2006 101 838
- US-A1- 2010 083 676
- US-A1- 2014 138 236

## Description

### BACKGROUND OF THE INVENTION

### Technical Field

The invention relates to water-production systems, in particular to the use of an air purification and condensation water-production system.

### 2. Description of Related Art

Existing fresh water resources which can be easily utilized by humans are mainly from rivers, lakes and shallow groundwater; fresh water resources are deficient due to large consumption, and clean water resources in places with abundant electricity and energy are also relatively deficient and need to be saved and protected due to serious pollution and extremely imbalanced regional distribution; water resources have already been precious resources for humans, and water resource problems have even become a major strategy concerning sustainable development of the national economy and society, and lasting political stability.

US 2006/101838 A1 refers to a water condenser includes a fan which draws a primary airflow through an upstream refrigerant evaporator, through an air-to-air heat exchanger and in one embodiment also an air-to-water heat exchanger uses cold water collected as condensate from the evaporator, the airflow to the evaporator being pre-cooled by passing through the air-to-air heat exchanger and the air-to-water heat exchanger prior to entry into the evaporator wherein the airflow is further cooled to below its dew point so as to condense moisture onto the evaporator for gravity collection. The evaporator is cooled by a closed refrigerant circuit. The refrigerant condenser for the closed refrigerant circuit may employ the fan drawing the airflow through the evaporator or a separate fan, both of which drawing an auxiliary airflow separate from the airflow through the evaporator through a manifold whereby both the auxiliary airflow and the airflow through the evaporator, or just the auxiliary airflow are guided through the condenser and corresponding fan.

US 2010/083676 A1 refers to an apparatus and method for extracting water from air in which a refrigeration system includes a cooling element to condense water from air. A first water vessel defines an inner volume. The first water vessel stores the water collected from the cooling element. An ozone device generates ozone inside the inner volume of the first water vessel. The ozone device provides the ozone to the water to resist bacteria and contaminants.

In certain remote arid and distressed areas where clean water resources are extremely difficult to obtain and water resource shortages exist, it is hard to lay long delivery pipelines for long-distance supply of drinking water, or to transport drinking water back and forth through transportation facilities without considering transportation costs, or to mount large water quality optimization systems, and consequentially, the cost of safe drinking water becomes extremely high; besides the high drinking water cost, water quality changes or secondary pollution can be caused by long-distance delivery or transportation, and consequentially, water cannot be directly drunk by people safely.

In addition, although the personal demands for drinking water of people in daily life are not definitely huge (the personal demands are different according to different areas, different climates and different environments), the requirements for the sanitation, cleanliness, sterility and non-toxicity of the drinking water are high; a solution to the production of pure drinking water at reasonable costs in places where energy and electricity are available is a significant problem urgently needing to be solved.

### BRIEF SUMMARY OF THE INVENTION

For solving the technical problems, the invention, as defined in claim 1, provides the use of an air purification and condensation water-production system for producing clean drinking water by means of energy.

According to the technical scheme adopted by the invention for solving the problems, the air purification and condensation water-production system for use in the invention comprises at least one water-production device, wherein the water-production device comprises a unit 1 body and a refrigeration system, the refrigeration system comprises evaporators and a condenser, and comprising a water collection tank, the evaporators are arranged on the side faces of the unit body; the water collection tank is arranged at the bottom of the unit body and located below the evaporators, and the condenser is arranged at the top of the unit body; outside air enters the unit body through the evaporators located on the side faces of the unit body and then is exhausted from air outlets in the top of the unit body through the condenser, and the water-production device comprises a control unit, the control unit comprises a controller, a temperature sensor and a humidity sensor, and the output end of the temperature sensor and the output end of the humidity sensor are connected with the controller; the condenser comprises a plurality of fans, and a driving circuit of the fans is connected with the controller, wherein the controller determines the number of fans needing to be started according to data collected by the temperature sensor and the humidity sensor and the fans are driven by a variable frequency motor, and the controller adjusts the rotating speed of the fans according to data collected by the temperature sensor and the humidity sensor.

According to the air purification and condensation water-production system, the water-production device comprises filter screens arranged on the outer sides of the evaporators, and outside air enters the unit body through the filter screens and the evaporators.

According to the air purification and condensation water-production system, the front end and the rear end of the unit body are sealed, and the evaporators are arranged on the two sides of the unit body.

According to the air purification and condensation water-production system for use in the invention, the water-production device comprises a control unit, the control unit comprises a controller, a temperature sensor and a humidity sensor, and the output end of the temperature sensor and the output end of the humidity sensor are connected with the controller; the condenser comprises a plurality of fans, and a driving circuit of the fans is connected with the controller; the controller determines the number of fans needing to be started according to data collected by the temperature sensor and the humidity sensor.

According to the air purification and condensation water-production system for use in the invention, the fans are driven by a variable frequency motor, and the controller adjusts the rotating speed of the fans according to data collected by the temperature sensor and the humidity sensor.

According to the air purification and condensation water-production system, the water-production device comprises a water pump, and a driving circuit of the water pump is connected with the controller; the control unit comprises a water level sensor, the water level sensor is mounted in the water collection tank, and the output end of the water level sensor is connected with the controller; the controller starts or stops the water pump according to data collected by the water level sensor.

The air purification and condensation water-production system comprises a main control unit and a plurality of water-production devices, and the controllers of the water-production devices are connected with the main control unit.

The air purification and condensation water-production system mention can be used according to the invention for producing pure drinking water at reasonable costs in places where energy and electricity are available, and overcome the drinking water difficulty for remote arid areas lacking water sources.

### BRIEF DESCRIPTION OF THE SEVERAL VIEWS OF THE DRAWINGS

A further detailed description of the invention is given with accompanying drawings and specific execution modes as follows.
FIG. 1 is an outside view of a water-production device for use in an embodiment of the invention; and
FIG. 2 is a transverse sectional view of the water-production device for use in the embodiment of the invention.

### DETAILED DESCRIPTION OF THE INVENTION

An air purification and condensation water-production system for use in an embodiment of the invention comprises a main control unit and a plurality of water-production devices.

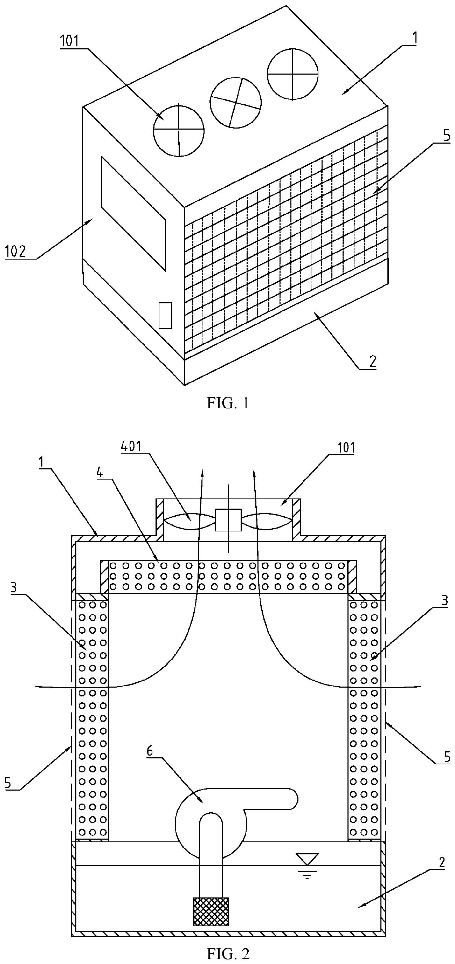

As is shown in FIG. 1 and FIG. 2, the water-production device structurally comprises a unit body 1, a water collection tank 2, metal filter screens 5, a water pump 6, a control unit and a refrigeration system.

A controller of the water-production device is connected with the main control unit of the water-production system.

The refrigeration system comprises a compressor, a throttle valve, evaporators 3 and a condenser 4, wherein the evaporators 3 are arranged on the two sides of the unit body 1, and the front end and the rear end of the unit body 1 are sealed; the water collection tank 2 is arranged at the bottom of the unit body 1 and located below the evaporators 3, and the condenser 4 is arranged at the top of the unit body 1.

The metal filter screens 5 are arranged on the outer sides of the evaporators 3, outside air enters the unit body 1 through the metal filter screens 5 and the evaporators 3 and then is exhausted from air outlets 101 in the top of the unit body 1 through the condenser 4; when the air passes through the evaporators 3, heat is absorbed by the evaporators, the temperature is decreased sharply, water vapor in the air is condensed into water drops, and the water drops drip into a water collector below.

The control unit comprises a controller, a water level sensor, a temperature sensor and a humidity sensor, wherein the output end of the temperature sensor and the output end of the humidity sensor are connected with the controller. The condenser 4 comprises a plurality of fans 401, the fans 401 are driven by a variable frequency motor, and a driving circuit of the variable frequency motor is connected with the controller. A control panel 102 of the water-production device is arranged at the front end of the unit body 1.

A driving circuit of the water pump 6 is connected with the controller. The water level sensor is mounted in the water collection tank 2, and the output end of the water level sensor is connected with the controller.

The air purification and condensation water-production system for use in the embodiment of the invention is composed of a plurality of water-production devices which operate independently, the number of combined water-production devices can be determined according to requirements, and the system can produce 10,000-1,000,000 liters of water every day according to the number of the water-production devices.

Each water-production device for use in the embodiment of the invention is controlled by one control unit, production, operation and alarm signals of each water-production device are all summarized into a main control unit of a central control room, and all the water-production devices are flexibly, safely and environmentally friendly coordinated by the main control unit of the central control room in an energy-saving mode.

The control unit of each water-production device controls the water-production function according to different working conditions in the external environment, data detected by the humidity sensors and the temperature sensors are summarized into the controllers, and the controllers adjust the air quantity by controlling the number (generally one to three) of operating fans and the operating speed of the fans, so that the optimal water production quantity is obtained, and water is produced through air purification and condensation in the most environment-friendly and energy-saving state. When the humidity of the external environment is low, the speed or the number of the fans is decreased, and the fans are even stopped; when the humidity of the external environment is high, the speed or the number of the fans is increased.

According to the embodiment of the invention, the evaporators are arranged on the two sides of the unit body of each water-production device, and the metal filter screens are arranged on the outer layer of each water-production device, so that ordinary sand and dust are isolated, the evaporators are protected, and the water production quality is improved; the evaporators on the two sides purify and condense air according to the air quantity for water production, and then condensate water is collected through the water collectors below the evaporators; when the water levels of the water collectors reach certain values, signals are emitted by the water level sensors and transmitted to the controllers, then the main control unit of the central control room is informed by the controllers, and the water pumps are synchronously started to pump the condensate water in the water collectors to a filter system.

The fans at the tops of the unit bodies pump air into the unit bodies from the outside of the evaporators, and the air passes through the condensers to cool high-pressure refrigerants; the air has already been cooled (with the temperature being lower than the outside temperature) by the evaporators after passing through the evaporators, and the cold air cools the high-pressure refrigerants when passing through the condensers; compared with a method for cooling high-pressure refrigerants through outside normal-temperature air, the efficiency is high; through the configuration, the size of the condensers can be reduced, the refrigeration systems are utilized more effectively, and the compression power is lowered; the system is more environmentally friendly and capable of saving more energy, and the water production quantity can be increased while the size of the unit bodies is reduced.

## Claims

1. Use of an air purification and condensation water-production system, comprising at least one water-production device, wherein the water-production device comprises a unit body (1) and a refrigeration system,
the refrigeration system comprises evaporators (3) and a condenser (4) and comprising a water collection tank (2),
the evaporators (3) are arranged on the side faces of the unit body;
the water collection tank (2) is arranged at the bottom of the unit body (1) and located below the evaporators (3),
the condenser (4) is arranged at the top of the unit body;
outside air enters the unit body (1) through the evaporators (3) located on the side faces of the unit body (1) and then is exhausted from air outlets (101) in the top of the unit body (1) through the condenser (4),
the water-production device comprises a control unit,
the control unit comprises a controller, a temperature sensor and a humidity sensor, and the output end of the temperature sensor and the output end of the humidity sensor are connected with the controller;
the condenser (4) comprises a plurality of fans, and a driving circuit of the fans is connected with the controller,
**characterized in that** the controller determines the number of fans needing to be started according to data collected by the temperature sensor and the humidity sensor and the fans are driven by a variable frequency motor, and the controller adjusts the rotating speed of the fans according to data collected by the temperature sensor and the humidity sensor.

2. Use of the air purification and condensation water-production system according to Claim 1, **characterized in that** the water-production device comprises filter screens (5) arranged on the outer sides of the evaporators (3), and outside air enters the unit body (1) through the filter screens (5) and the evaporators (3).

3. Use of the air purification and condensation water-production system according to Claim 1 or 2, **characterized in that** the front end and the rear end of the unit body (1) are sealed, and the evaporators (3) are arranged on the two sides of the unit body.

4. Use of the air purification and condensation water-production system according to Claims 1 to 3, **characterized in that** the water-production device comprises a water pump, and a driving circuit of the water pump is connected with the controller; the control unit comprises a water level sensor, the water level sensor is mounted in the water collection tank (2), and the output end of the water level sensor is connected with the controller; the controller starts or stops the water pump according to data collected by the water level sensor.

5. Use of the air purification and condensation water-production system according to Claims 1 to 4, **characterized by** comprising a main control unit and a plurality of water-production devices, wherein the controllers of the water-production devices are connected with the main control unit.

## Patentansprüche

1. Nutzung eines Luftreinigungs- und Kondenswassererzeugungssystems, umfassend mindestens eine Wassererzeugungseinrichtung, wobei die Wassererzeugungseinrichtung einen Einheitskörper (1) und ein Kältesystem umfasst,
das Kältesystem Verdampfer (3) und einen Kondensator (4) umfasst, und umfassend einen Wassersammelbehälter (2),
die Verdampfer (3) auf den Seitenflächen des Einheitskörpers angeordnet sind;
der Wassersammelbehälter (2) am Boden des Einheitskörpers (1) angeordnet ist und sich unterhalb der Verdampfer (3) befindet,
der Kondensator (4) oben im Einheitskörper angeordnet ist;
Außenluft durch die auf den Seitenflächen des Einheitskörpers (1) befindlichen Verdampfer (3) in den Einheitskörper (1) eintritt und danach aus Luftauslässen (101) oben im Einheitskörper (1) durch den Kondensator (4) ausgestoßen wird,
die Wassererzeugungseinrichtung eine Steuereinheit umfasst,
die Steuereinheit eine Steuerung, einen Temperaturfühler und einen Feuchtefühler umfasst und das Ausgabeende des Temperaturfühlers und das Ausgabeende des Feuchtefühlers mit der Steuerung verbunden sind;
der Kondensator (4) eine Vielzahl von Ventilatoren umfasst und eine Antriebsschaltung der Ventilatoren mit der Steuerung verbunden ist,
**dadurch gekennzeichnet, dass** die Steuerung die Zahl der Ventilatoren, die einzuschalten sind, gemäß durch den Temperaturfühler und den Feuchtefühler gesammelten Daten bestimmt und die Ventilatoren durch einen Motor mit variabler Frequenz angetrieben werden und die Steuerung die Drehgeschwindigkeit der Ventilatoren gemäß durch den Temperaturfühler und den Feuchtefühler gesammelten Daten anpasst.

2. Nutzung des Luftreinigungs- und Kondenswassererzeugungssystems nach Anspruch 1, **dadurch gekennzeichnet, dass** die Wassererzeugungseinrichtung auf den Außenseiten der Verdampfer (3) angeordnete Filtersiebe (5) umfasst und Außenluft durch die Filtersiebe (5) und die Verdampfer (3) in den Einheitskörper (1) eintritt.

3. Nutzung des Luftreinigungs- und Kondenswassererzeugungssystems nach Anspruch 1 oder 2, **dadurch gekennzeichnet, dass** das vordere Ende und das hintere Ende des Einheitskörpers (1) abgedichtet sind und die Verdampfer (3) auf den zwei Seiten des Einheitskörpers angeordnet sind.

4. Nutzung des Luftreinigungs- und Kondenswassererzeugungssystems nach den Ansprüchen 1 bis 3, **dadurch gekennzeichnet, dass** die Wassererzeugungseinrichtung eine Wasserpumpe umfasst und eine Antriebsschaltung der Wasserpumpe mit der Steuerung verbunden ist; die Steuereinheit einen Wasserfüllstandsfühler umfasst, der Wasserfüllstandsfühler im Wassersammelbehälter (2) montiert ist und das Ausgabeende des Wasserfüllstandsfühlers mit der Steuerung verbunden ist; die Steuerung die Wasserpumpe gemäß durch den Wasserfüllstandsfühler gesammelten Daten ein- oder ausschaltet.

5. Nutzung des Luftreinigungs- und Kondenswassererzeugungssystems nach den Ansprüchen 1 bis 4, **dadurch gekennzeichnet, dass** es eine Hauptsteuereinheit und eine Vielzahl von Wassererzeugungseinrichtungen umfasst, wobei die Steuerungen der Wassererzeugungseinrichtungen mit der Hauptsteuereinheit verbunden sind.

## Revendications

1. Utilisation d'un système de purification d'air et de production d'eau de condensation, comportant au moins un dispositif de production d'eau, le dispositif de production d'eau comportant un corps (1) d'unité et un système frigorifique,
le système frigorifique comportant des évaporateurs (3) et un condenseur (4) et comportant un réservoir (2) de collecte d'eau,
les évaporateurs (3) étant agencés sur les faces latérales du corps d'unité ;
le réservoir (2) de collecte d'eau étant agencé au bas du corps (1) d'unité et situé au-dessous des évaporateurs (3),
le condenseur (4) étant agencé au sommet du corps d'unité ;
de l'air extérieur entrant dans le corps (1) d'unité à travers les évaporateurs (3) situés sur les faces latérales du corps (1) d'unité puis étant évacué à partir de sorties (101) d'air dans le sommet du corps (1) d'unité à travers le condenseur (4),
le dispositif de production d'eau comportant une unité de commande,
l'unité de commande comportant un moyen de commande, un capteur de température et un capteur d'humidité, et l'extrémité de sortie du capteur de température et l'extrémité de sortie du capteur d'humidité étant reliées au moyen de commande ;
le condenseur (4) comportant une pluralité de ventilateurs, et un circuit d'actionnement des ventilateurs étant relié au moyen de commande, **caractérisé en ce que** le moyen de commande détermine le nombre de ventilateurs qu'il est nécessaire de démarrer d'après des données recueillies par le capteur de température et le capteur d'humidité et **en ce que** les ventilateurs sont entraînés par un moteur à fréquence variable, et **en ce que** le moyen de commande règle la vitesse de rotation des ventilateurs d'après des données recueillies par le capteur de température et le capteur d'humidité.

2. Utilisation du système de purification d'air et de production d'eau de condensation selon la revendication 1, **caractérisé en ce que** le dispositif de production d'eau comporte des tamis filtrants (5) agencés sur les côtés extérieurs des évaporateurs (3), et **en ce que** de l'air extérieur entre dans le corps (1) d'unité à travers les tamis filtrants (5) et les évaporateurs (3).

3. Utilisation du système de purification d'air et de production d'eau de condensation selon la revendication 1 ou 2, **caractérisé en ce que** l'extrémité avant et l'extrémité arrière du corps (1) d'unité sont scellées, et **en ce que** les évaporateurs (3) sont agencés sur les deux côtés du corps d'unité.

4. Utilisation du système de purification d'air et de production d'eau de condensation selon les revendications 1 à 3, **caractérisé en ce que** le dispositif de production d'eau comporte une pompe à eau, et **en ce qu'**un circuit d'actionnement de la pompe à eau est relié au moyen de commande ; l'unité de commande comporte un capteur de niveau d'eau, le capteur de niveau d'eau est monté dans le réservoir (2) de collecte d'eau, et l'extrémité de sortie du capteur de niveau d'eau est reliée au moyen de commande ; le moyen de commande démarre ou arrête la pompe à eau d'après des données recueillies par le capteur de niveau d'eau.

5. Utilisation du système de purification d'air et de production d'eau de condensation selon les revendications 1 à 4, **caractérisé en ce qu'**il comporte une unité de commande principale et une pluralité de dispositifs de production d'eau, les moyens de commande des dispositifs de production d'eau étant reliés à l'unité de commande principale.
